# EUROPÄISCHE PATENTANMELDUNG

(11) **EP 3 309 487 A1**
(43) Veröffentlichungstag der Anmeldung: **18.04.2018**
(21) Anmeldenummer: 17196111.3
(22) Anmeldetag: 12.10.2017
(51) Int. Cl.: F25D 29/00, H04L 12/28

(54) **KÜHL- UND/ODER GEFRIERGERÄT**

(30) Priorität: 17.10.2016 DE 102016012401; 19.01.2017 DE 102017000463
(71) Anmelder: Liebherr-Hausgeräte Ochsenhausen GmbH, 88416 Ochsenhausen (DE)
(72) Erfinder: Giesa, Andreas, 88400 Biberach (DE); Locher, Erwin, 88416 Ochsenhausen (DE)
(74) Vertreter: Herrmann, Uwe

(57) **Zusammenfassung**

Die vorliegende Erfindung betrifft ein Kühl- und/oder Gefriergerät mit wenigstens einem Kommunikationsmodul und wenigstens einem Endgerät.

## Beschreibung

Die Erfindung betrifft ein Kühl- und/oder Gefriergerät mit wenigstens einem Kommunikationsmodul und wenigstens einem Endgerät.

Das Kommunikationsmodul ist dabei dazu eingerichtet, eine Datenverbindung zwischen der Geräte-Elektronik des Kühl- und/oder Gefriergeräts und dem Endgerät herzustellen, während das Endgerät dazu eingerichtet ist, einer Bedienperson Einstellungen insbesondere der Geräte-Elektronik des Kühl- und/oder Gefriergeräts zu ermöglichen.

Bei aus dem Stand der Technik bekannten Kühl- und/oder Gefriergeräten ist es bekannt, eine kabelgebundene Verbindung zwischen einem Kommunikationsmodul und wenigstens einem Endgerät vorzusehen, wobei bekannte Kommunikationsmodule üblicherweise außerhalb des entsprechenden Kühl- und/oder Gefriergeräts platziert bzw. bereitgestellt werden. Durch die kabelgebundene Verbindung ist die Möglichkeit beschränkt, eine Verbindung zwischen dem Kommunikationsmodul und weiteren Smart-Home Vernetzungsstandards und/oder Hardwaremodulen herzustellen, die beispielsweise innerhalb des Kühl- und/oder Gefriergeräts positionierbar sind.

Bei weiteren aus dem Stand der Technik bekannten Kühl- und/oder Gefriergeräten ist es ferner bekannt, das Kommunikationsmodul fest im Kühl- und/oder Gefriergerät zu verbauen, wodurch zum einen keine Modularität des Gesamtsystems ermöglicht wird und zum anderen ein Nachrüsten eines bestehenden Kühl- und/oder Gefriergeräts mit einem Kommunikationsmodul erschwert ist. Die bekannten Vorrichtungen sind ferner proprietär ausgebildet, was eine einfache Integration von Systemen von Drittanbietern nachteiligerweise verhindert.

Vor diesem Hintergrund ist es Aufgabe der Erfindung ein verbessertes Kühl- und/oder Gefriergerät bereitzustellen, welches insbesondere eine vereinfachte Anbindung bzw. Vernetzung des Kühl- und/oder Gefriergeräts an Hardware- und/oder Softwaresysteme insbesondere von Drittanbietern ermöglicht.

Diese Aufgabe wird erfindungsgemäß durch ein Kühl- und/oder Gefriergerät mit den Merkmalen des Anspruchs 1 gelöst. Vorteilhafte Ausbildungen sind Gegenstand der Unteransprüche. Demnach ist ein Kühl- und/oder Gefriergerät vorgesehen, bei dem das Kommunikationsmodul dazu eingerichtet ist mit dem Endgerät direkt über eine Funkverbindung und ohne Internetzugang und/oder indirekt über eine Funkverbindung und mit Internetzugang und über einen Server zu kommunizieren. Bei der direkten Funkverbindung werden somit Daten direkt zwischen den wenigstens zwei Komponenten per Funk übertragen, hierzu kann ein Standard wie beispielsweise Bluetooth genutzt werden. Bei der indirekten Funkverbindung werden dagegen Daten in einem Zwischenschritt über das Internet bzw. einen über das Internet erreichbaren Server transferiert werden.

Das Kommunikationsmodul kann über eine Schnittstelle am Kühl- und/oder Gefriergerät wie z.B. über oder in einem Steckschacht mit dem Kühl- und/oder Gefriergerät insbesondere zum Datentransfer verbunden sein und so mit der Geräte-Elektronik des Kühl- und/oder Gefriergeräts interagieren. Die Kommunikation des Endgeräts mit dem Kommunikationsmodul kann über eine Funkverbindung wie z.B. über eine Bluetooth-Verbindung direkt, d.h. ohne Internet-Zugang erfolgen. Hierbei verbindet sich das Kommunikationsmodul direkt mit dem Endgerät und es können durch den mittels der Verbindung ermöglichten Datentransfer beispielsweise Steuerbefehle vom Endgerät an das Kommunikationsmodul und von dort an die Geräte-Elektronik des Kühl- und/oder Gefriergeräts gesendet werden. Umgekehrt können auch Daten beispielsweise zum Betriebszustand des Kühl- und/oder Gefriergeräts vom Kommunikationsmodul an das Endgerät gesandt werden und dort einem Nutzer des Kühl- und/oder Gefriergeräts angezeigt werden.

Die Kommunikation kann alternativ oder zusätzlich über eine Funkverbindung indirekt, d.h. mit bzw. über einem Internetzugang und/oder über eine WLAN-Verbindung erfolgen. Das Kommunikationsmodul verbindet sich hierbei über das Internet mit einem Server und/oder einem Cloud-Dienst, der wiederum dazu eingerichtet ist, eine Verbindung zum Endgerät herzustellen.

In einer bevorzugten Ausführung ist denkbar, dass das Endgerät ein Tablet, Smart-Phone, PC und/oder ein Wireless Display ist. Bei dem Wireless Display kann es sich um eine am Kühl- und/oder Gefriergerät dauerhaft oder trennbar vorgesehene beispielsweise einen Touchscreen umfassende Ein-/Ausgabe-Einrichtung handeln. Denkbar ist auch, dass zwei oder mehrere unterschiedliche Endgeräte in Verbindung mit demselben Kühl- und/oder Gefriergerät verwendet werden. Hierdurch können beispielsweise unterschiedliche Personen und gegebenenfalls von unterschiedlichen Orten aus mit dem Kühl- und/oder Gefriergerät bzw. mit dessen Geräte-Elektronik interagieren.

Die Nutzung von Tablets, Smart-Phones und/oder PCs ermöglicht es dem Nutzer oder den Nutzern bereits in einem Haushalt vorhandene und genutzte Geräte mit einem ggf. bereits bestehenden bzw. genutzten Kühl- und/oder Gefriergerät zu koppeln. Hierdurch wird zum einen die Ausführung bzw. Herstellung des Kühl- und/oder Gefriergeräts vereinfacht, da die entsprechenden Endgeräte nicht vom Hersteller des Kühl- und/oder Gefriergeräts bereitgestellt werden müssen. Zum anderen wird es vermieden, die Anzahl der in einem Haushalt vorhandenen Bediengeräte bzw. Endgeräte zu erhöhen.

In einer weiteren bevorzugten Ausführung ist denkbar, dass das Kommunikationsmodul über eine Schnittstelle, insbesondere über einen Steckschacht und/oder in einem Steckschacht mit der Geräte-Elektronik des Kühl- und/oder Gefriergeräts verbunden ist. Hierdurch wird eine auch nachträgliche Verbindung eines Kommunikationsmoduls mit einem Kühl- und/oder Gefriergerät ermöglicht, welches ursprünglich kein derartiges Kommunikationsmodul umfasst.

Vorteilhafterweise wird so das Nachrüsten eines an sich aus dem Stand der Technik bekannten Kühl- und/oder Gefriergerät mit einem entsprechenden Kommunikationsmodul erleichtert. Der Steckschacht kann dabei so groß ausgeführt sein, dass das Kommunikationsmodul gänzlich innerhalb des Steckschachts angeordnet werden kann. Damit wird ein einheitliches Erscheinungsbild des Kühl- und/oder Gefriergeräts ermöglicht und das Kommunikationsmodul kann gegebenenfalls ohne eigenes Schutzgehäuse ausgeführt sein und innerhalb des Kühl- und/oder Gefriergeräts auch nachträglich integriert werden.

In einer weiteren bevorzugten Ausführung ist denkbar, dass das Kommunikationsmodul eine vom restlichen Kühl- und/oder Gefriergerät unabhängige Stromversorgung umfasst. Auch diese Maßnahme erleichtert das Nachrüsten eines gegebenenfalls ansonsten aus dem Stand der Technik bekannten Kühl- und/oder Gefriergeräts mit einem entsprechenden Kommunikationsmodul. Das Nachrüsten kann hierbei ohne wesentliche konstruktive Eingriffe in das Kühl- und/oder Gefriergerät durchgeführt werden. Hierbei kann das Kühl- und/oder Gefriergerät so ausgebildet sein, dass eine unabhängige Stromversorgung von außerhalb des Kühl- und/oder Gefriergeräts in den Steckschacht verlegbar ist. Der Steckschacht kann hierzu nach außen führende Durchführungen aufweisen, durch die beispielsweise ein Stromkabel verlegt werden kann.

In einer weiteren bevorzugten Ausführung ist denkbar, dass die direkte Funkverbindung eine Bluetooth-Verbindung ist. Denkbar ist auch die Verwendung eines sonstigen verbreiteten Standards von Funkverbindungen. Durch die Verwendung eines verbreiteten Funkstandards wird die Kopplung des erfindungsgemäßen Kühl- und/oder Gefriergeräts mit weiteren Geräten, die ebenfalls den entsprechenden Standard nutzen, erleichtert. Hierdurch kann eine möglichst große Zahl unterschiedlicher Endgeräte und/oder sonstiger Hardwaremodule mit dem Kommunikationsmodul verbunden werden, was dem Nutzer des Kühl- und/oder Gefriergeräts eine große Flexibilität bei der Erweiterung der Vernetzung des Kühl- und/oder Gefriergeräts bietet.

In einer weiteren bevorzugten Ausführung ist ferner denkbar, dass die indirekte Funkverbindung eine WLAN-Verbindung ist oder umfasst. Über beispielsweise eine in einem Haushalt bereits vorhandene WLAN-Verbindung kann somit das Kühl- und/oder Gefriergerät einfach eingebunden bzw. vernetzt und insbesondere mit dem Internet und/oder mit weiteren mit der WLAN-Verbindung und/oder mit dem Internet verbundenen Hardwaremodulen bzw. -komponenten angebundenen bzw. verbunden werden.

In einer weiteren bevorzugten Ausführung ist denkbar, dass des Endgerät dazu eingerichtet ist, insbesondere über eine App und/oder Website Parameter des Kühl- und/oder Gefriergeräts einzustellen und/oder Interaktionen mit dem Kühl- und/oder Gefriergerät wie insbesondere die Verstellung der Soll-Temperatur durchzuführen. Hierzu kann eine entsprechende App auf dem Endgerät installiert sein oder mittels des Endgeräts eine entsprechende Webseite abrufbar sein. Es wird dem Nutzer dadurch besonders einfach gemacht beispielsweise von Unterwegs oder in räumlichem Abstand von dem Kühl- und/oder Gefriergerät mit diesem zu interagieren. Wenn das Kühl- und/oder Gefriergerät Hardware- und/oder Softwaremodule für ein Lebensmittelmanagement umfasst, so kann der Nutzer dabei unabhängig von seiner Position beispielsweise gewünschte bzw. benötigte Lebensmittel oder sonstige Objekte zu einer Einkaufsliste hinzufügen, welche dann gegebenenfalls von dem Lebensmittel- bzw. Einkaufsmanagement insbesondere selbständig bestellt und/oder einer Einkaufsliste hinzugefügt werden.

In einer weiteren bevorzugten Ausführung ist denkbar, dass das Kommunikationsmodul dazu eingerichtet ist, eine Verbindung mit Smart-Home-Vernetzungsstandards wie insbesondere Apple-Home-Kit herzustellen und/oder auf Anwendungen und/oder Dienste von Drittanbietern wie insbesondere Amazon zuzugreifen. Denkbar ist somit der Zugriff auf internetbasierte Lieferdienste, die im Zusammenwirken mit dem Kühl- und/oder Gefriergerät dazu genutzt werden können, ein wenigstens teilweise automatisiertes Lebensmittelmanagement zu ermöglichen. Dabei können beispielsweise Bestell- und/oder Liefervorgänge von dem Kühl- und/oder Gefriergerät veranlasst werden.

Denkbar ist hierzu die Verbindung des Kühl- und/oder Gefriergeräts mit einer davon beabstandeten automatisch verschließ- und öffenbaren Entgegennahmevorrichtung, welche zur Entgegennahme beispielsweise einer Lebensmittel-Lieferung außerhalb der Wohnung des Nutzers des Kühl- und/oder Gefriergeräts ausgebildet sein kann. Das Kühl- und/oder Gefriergerät kann auch mit dieser Entgegennahmevorrichtung vernetzt sein und so Lieferungen auch ohne Beteiligung oder Anwesenheit des Nutzers entgegennehmen bzw. die Entgegennahmevorrichtung öffnen und schließen. Hierbei kann beispielsweise das Kommunikationsmodul dazu eingerichtet sein, entsprechende Steuerungs- und Kommunikationsvorgänge durchzuführen.

Denkbar ist, dass entsprechende Entgegennahmevorrichtungen individuell oder gemeinschaftlich von benachbarten Personen genutzt werden. Denkbar ist auch, dass Drittanbieter bzw. Lieferdienste auf die Entgegennahmevorrichtung zugreifen können und den in der Entgegennahmevorrichtung enthaltenen Lager- bzw. Kühlraum zur Optimierung ihrer Dienste nutzen. Beispielsweise können Lieferdienste durch Nutzung entsprechend vernetzter Kühl- und/oder Gefriergerät die Entgegennahmevorrichtungen zur Glättung ihres Arbeitsaufkommens und zur Reduzierung der Größen ihrer Zentrallager nutzen. Die Entgegennahmevorrichtungen können dabei auch zu Zeiten genutzt werden, in denen üblicherweise nur geringe Liefertätigkeiten ausführbar sind, weil beispielsweise Nutzer schlafen oder arbeitsbedingt nicht zu Hause sind. Dies führt zu einer Glättung des Arbeitsaufkommens des Lieferdienstes. Auch können freie Lagervolumen innerhalb der Entgegennahmevorrichtungen zum Zwischenlagern von Liefergütern genutzt werden, wodurch die Größe von Zentrallagern und der Anteil von Lieferfahrten mit geringer Auslastung vermindert werden kann. Durch beide Maßnahmen lassen sich für Lieferdienste Kostenvorteile erzielen.

In einer weiteren bevorzugten Ausgestaltung ist ferner denkbar, dass das Kommunikationsmodul und/oder das Endgerät modular aufgebaut sind. Mit dem modularen Aufbau kann vorliegend gemeint sein, dass die genannten Komponenten beispielsweise eine eigenständige, insbesondere von der weiteren Stromversorgung des Kühl- und/oder Gefriergeräts getrennte Stromversorgung umfassen. Ferner können die genannten Komponenten nicht innerhalb des Gefüges des Kühl- und/oder Gefriergeräts angeordnet sein, sondern davon beabstandet und/oder lösbar damit verbunden ausgebildet sein.

In einer weiteren vorteilhaften Ausführung ist denkbar, dass das Endgerät mit dem Kommunikationsmodul zum Einstellen insbesondere sicherheitsrelevanter Parameter physisch verbindbar ist. Hierbei kann das Endgerät beispielsweise an eine Steckverbindung des Kommunikationsmoduls und/oder des Kühl- und/oder Gefriergeräts gekoppelt werden, wodurch eine Sicherheitseinstellung freigeschaltet wird und das Einstellen bestimmter insbesondere sicherheitsrelevanter Parameter ermöglicht wird. Durch diese Sicherheitsvorkehrung wird das Verstellen sicherheitsrelevanter Parameter von einem von dem Kommunikationsmodul beabstandeten Endgerät, welches beispielsweise einer unberechtigten Person zur Verfügung stehen kann, erschwert oder verhindert.

Weitere Einzelheiten und Vorteile der Erfindung sind anhand des in der Figur gezeigten Ausführungsbeispiels erläutert.

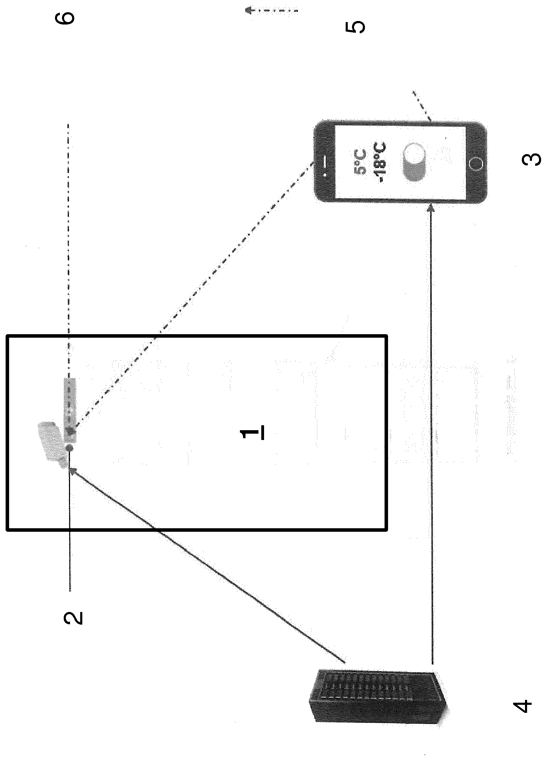

Die einzelne Figur 1 zeigt die schematische Anordnung eines erfindungsgemäßen Kühl- und/oder Gefriergeräts 1 mit einem Kommunikationsmodul 2 und einem als Smart-Phone ausgebildeten Endgerät 3. Das Kommunikationsmodul 2 und das Endgerät 3 sind direkt über eine Funkverbindung und/oder indirekt über eine Funkverbindung mit Internetzugang und über einen Server 4 miteinander zum Datenaustausch verbindbar, d.h. sie können auf die beschriebenen Arten miteinander kommunizieren.

Über eine Anwendung wie eine Website oder eine App oder Ähnliches kann ein Nutzer auf die Parameter eines Kühl- und/oder Gefriergeräts 1 zugreifen und beispielsweise Temperaturkurven des Kühl- und/oder Gefriergeräts 1 abrufen. Der Nutzer kann ferner weitere Interaktionen wie beispielsweise das Verstellen der Soll-Temperatur des Kühl- und/oder Gefriergeräts 1 ausführen.

Über wenigstens eine der zwei gezeigten Funkverbindungen kann das Kommunikationsmodul 2 außerdem eine Verbindung mit weiteren Smart-Home-Vernetzungsstandards 6 von insbesondere Drittanbietern 5 herstellen. Dabei kann es sich beispielsweise um das Apple-Home-Kit handeln. Ferner kann über die genannten Funkverbindungen auf Anwendungen und/oder Dienste von Drittanbietern wie beispielsweise von Amazon zugegriffen werden.

Durch die modulare Vernetzungslösung, welche erfindungsgemäß ermöglicht ist, und in Kombination mit der einfachen Anwendung des Kühl- und/oder Gefriergeräts 1 an Standards, Anwendungen und Dienste von Drittanbietern, ist für den Nutzer des erfindungsgemäßen Kühl- und/oder Gefriergeräts 1 ein hohes Maß an Flexibilität möglich. Die modulare Vernetzungslösung erlaubt die Umsetzung für das gesamte Gerätespektrum und nicht lediglich für ausgewählte Highend-Geräte.

Das in der Figur als Smart-Phone ausgebildete Endgerät 3 kann alternativ als Tablet, PC und/oder ein Wireless Display ausgebildet sein. Denkbar ist auch die erfindungsgemäße Kopplung des Kühl- und/oder Gefriergeräts mit mehr als nur einem einzelnen Endgerät 3. Dabei kann es sich auch um unterschiedliche Endgeräte 3 handeln, welche von unterschiedlichen Personen und/oder an unterschiedlichen Orten genutzt werden können.

Das Kommunikationsmodul 2 kann über eine Schnittstelle insbesondere im oberen Bereich des Kühl- und/oder Gefriergeräts 1 bzw. in einem oberen Bereich des Gehäuses des Kühl- und/oder Gefriergeräts 1 vorgesehen sein.

Die Vernetzung des Kühl- und/oder Gefriergeräts 1 kann auch weitere, von dem Endgerät 3 unterschiedliche Komponenten umfasse. Denkbar ist beispielsweise die Verbindung des Kühl- und/oder Gefriergeräts 1 mit einer Entgegennahmevorrichtung, die vom Kühl- und/oder Gefriergerät 1 beabstandet und beispielsweise in einem öffentlich wenigstens teilweise zugänglichen Bereich positioniert sein kann. Bei dem Bereich kann es sich um ein Treppenhaus eines Mehrfamilienhauses oder den Nahbereich eines Einfamilienhauses handeln, in dem die Entgegennahmevorrichtung beispielsweise über eine WLAN-Verbindung mit dem Kühl- und/oder Gefriergerät und/oder mit dem Endgerät 3 koppelbar ist.

Die Entgegennahmevorrichtung kann beispielsweise als über Funk mittelbar oder unmittelbar mittels insbesondere des Kühl- und/oder Gefriergeräts 1 öffenbarer und schließbarer Lagerbereich ausgebildet sein. In der Entgegennahmevorrichtung können einzeln öffenbare und schließbare Lagerteilbereiche vorgesehen sein, welche gegebenenfalls zur Kühlung von darin eingelagertem Lagergut ausgebildet sein können. Nutzer können über ihr vernetztes Kühl- und/oder Gefriergerät Bestellungen vornehmen oder vornehmen lassen, die in die Entgegennahmevorrichtung eingelagert werden können, ohne das der Nutzer hierzu weiter tätig werden oder vor Ort sein muss.

Für Lieferdienste, die Zugang zu einer Vielzahl entsprechender Entgegennahmevorrichtungen haben können, entsteht dabei die Möglichkeit, die Entgegennahmevorrichtungen als dezentrale Kleinlager zur Glättung ihres Arbeitsaufkommens und/oder zur Verringerung der Größe ihrer Zentrallager zu nutzen.

Auch können mittels derartig vernetzter dezentraler Kleinlager die Lieferwege und/oder Lieferzeiten optimiert werden, da aus bekannten Bestellverhalten der Nutzer die Entgegennahmevorrichtungen bzw. deren Inhalte auf das Bestellverhalten der jeweiligen Nutzer hin angepasst werden können.

## Patentansprüche

1. Kühl- und/oder Gefriergerät mit wenigstens einem Kommunikationsmodul und wenigsten einem Endgerät, **dadurch gekennzeichnet, dass** das Kommunikationsmodul dazu eingerichtet ist mit dem Endgerät direkt über eine Funkverbindung und ohne Internetzugang und/oder indirekt über eine Funkverbindung und mit Internetzugang und über einen Server zu kommunizieren.

2. Kühl- und/oder Gefriergerät nach Anspruch 1, **dadurch gekennzeichnet, dass** das Endgerät ein Tablet, Smart-Phone, PC und/oder ein Wireless Display ist.

3. Kühl- und/oder Gefriergerät nach Anspruch 1 oder 2, **dadurch gekennzeichnet, dass** das Kommunikationsmodul über eine Schnittstelle, insbesondere über einen und/oder in einem Steckschacht mit der Geräte-Elektronik des Kühl- und/oder Gefriergeräts verbunden ist.

4. Kühl- und/oder Gefriergerät nach Anspruch 1, 2 oder 3, **dadurch gekennzeichnet, dass** das Kommunikationsmodul eine vom restlichen Kühl- und/oder Gefriergerät unabhängige Stromversorgung umfasst.

5. Kühl- und/oder Gefriergerät nach einem der vorhergehenden Ansprüche, **dadurch gekennzeichnet, dass** die direkte Funkverbindung eine Bluetooth-Verbindung ist.

6. Kühl- und/oder Gefriergerät nach einem der vorhergehenden Ansprüche, **dadurch gekennzeichnet, dass** die indirekte Funkverbindung eine WLAN-Verbindung ist oder umfasst.

7. Kühl- und/oder Gefriergerät nach einem der vorhergehenden Ansprüche, **dadurch gekennzeichnet, dass** das Endgerät dazu eingerichtet ist, insbesondere über wenigstens eine App und/oder Webseite Parameter des Kühl- und/oder Gefriergeräts einzustellen und/oder Interaktionen mit dem Kühl- und/oder Gefriergerät wie insbesondere die Verstellung der Soll-Temperatur durchzuführen.

8. Kühl- und/oder Gefriergerät nach einem der vorhergehenden Ansprüche, **dadurch gekennzeichnet, dass** das Kommunikationsmodul dazu eingerichtet ist, eine Verbindung mit Smart-Home-Vernetzungsstandards wie insbesondere Apple-Home-Kit herzustellen und/oder auf Anwendungen und/oder Dienste von Drittanbietern wie insbesondere Amazon zuzugreifen.

9. Kühl- und/oder Gefriergerät nach einem der vorhergehenden Ansprüche, **dadurch gekennzeichnet, dass** das Kommunikationsmodul und/oder das Endgerät modular aufgebaut sind.
